# EUROPEAN PATENT SPECIFICATION

(11) **EP 2 955 343 B1**
(45) Date of publication and mention of the grant of the patent: **30.08.2023**
(21) Application number: 15164916.7
(22) Date of filing: 23.04.2015
(51) Int. Cl.: F01L 13/08, F02B 61/02, F02D 41/06, F02N 11/04, F02N 19/00, F02D 13/02

(54) **ENGINE WITH DECOMPRESSION DEVICES**
MOTOR MIT DEKOMPRESSIONSVORRICHTUNGEN
MOTEUR AVEC DISPOSITIFS DE DÉCOMPRESSION

(30) Priority: 24.04.2014 TW 103114813; 02.05.2014 TW 103115880; 22.08.2014 TW 103128917
(43) Date of publication of application: 16.12.2015
(73) Proprietor: Sanyang Motor Co., Ltd., Hsinchu (TW)
(72) Inventor: Yu, Chih-Wen, Hsinchu (TW); Lee, Jin-Lu, Hsinchu (TW)
(74) Representative: Barker Brettell LLP

(56) References cited:
- JP-A- 2011 058 474
- US-A- 4 790 271
- US-A1- 2003 019 455

## Description

### BACKGROUND OF THE INVENTION

### 1. Field of the Invention

The present invention relates to an engine with decompression devices, and more particularly, to an engine with decompression devices adapted for motorcycles.

### 2. Description of Related Art

In conventional internal combustion engines, a so-called engine decompression device has been developed for solving the problem that upon engine flameout and stop, a crankshaft requires counteracting a greater resistance when the engine starts in a compression stroke.

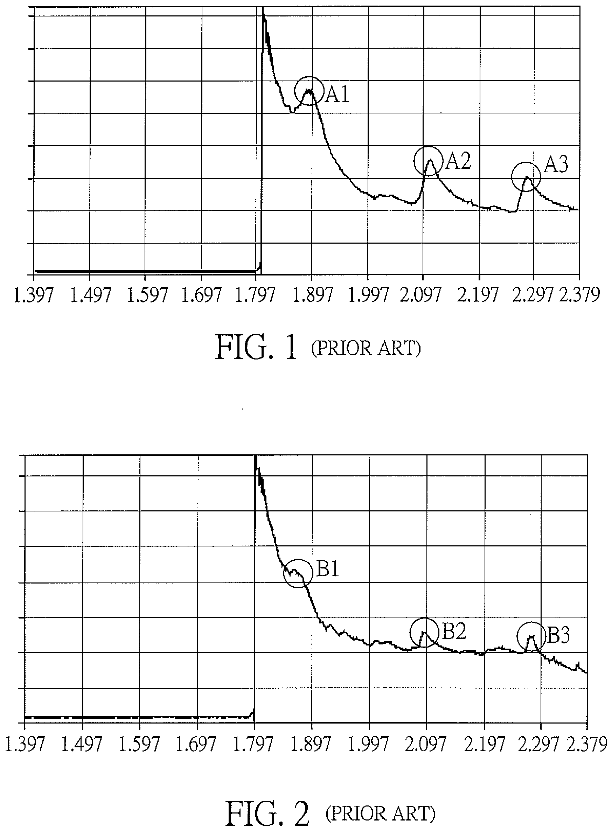

References are made to FIG. 1, a graph illustrating energy consumption for a starting motor when starting a conventional engine which is not installed with any decompression device; and to FIG. 2, a graph illustrating energy consumption for the starting motor when starting the conventional engine which is installed with a centrifugal decompression device. As shown in FIG. 1, a horizontal axis indicates time taken for a starting motor to drive a crankshaft for rotation; whereas a vertical axis indicates energy consumed for the starting motor to drive the crankshaft for rotation. In the conventional engine which is not installed with any decompression device, a curve (namely a product of voltage and current), indicating energy consumed for the starting motor to drive the crankshaft for rotation, reveals a greater change both in the voltage and the current because of an increasing resistance through an engine compression stroke and thus more energy is consumed. As shown in FIG. 2, when the starting motor drives the crankshaft for rotation, because the engine has been installed with a centrifugal decompression device, energy consumption at a compression stroke decreases as compared with the engine which is not installed with any decompression device. That is to say, the energy consumption A1, A2, and A3 shown in FIG. 1 decreases to B1, B2, and B3 shown in FIG. 2.

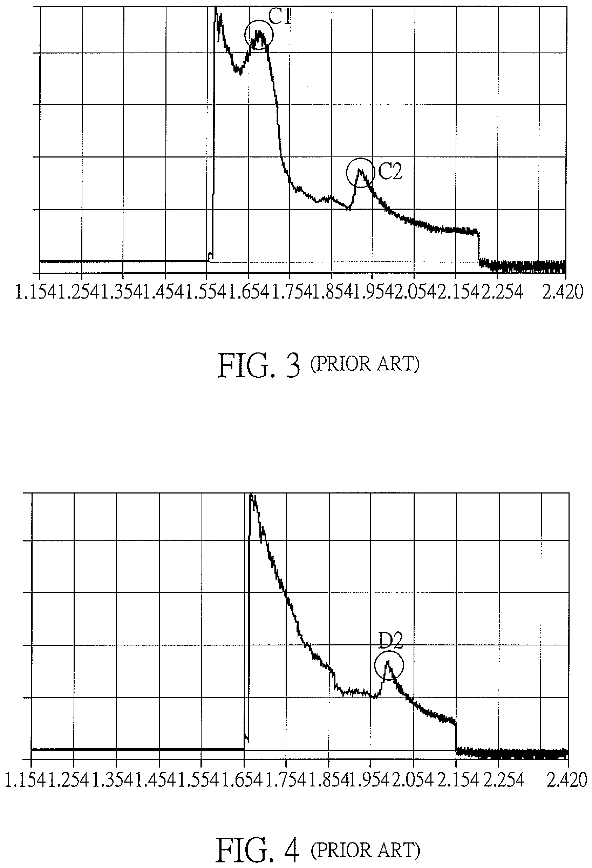

Further referring to FIG. 3, a graph illustrating energy consumption for a starting motor when starting another conventional engine which is not installed with any decompression device; and to FIG. 4, a graph illustrating energy consumption for the starting motor when starting the another conventional engine which is installed with a one-way decompression device, a horizontal axis indicates time taken for a starting motor to drive a crankshaft for rotation; whereas a vertical axis indicates energy consumed for the starting motor to drive the crankshaft for rotation. In this particular conventional engine which is installed with a one-way decompression device, where resistance can be found almost eliminated during the starting motor driving the crankshaft for rotation through a first engine compression stroke, and thus energy is consumed much less as shown in FIG. 3, C1, and even more less as shown in FIG. 4. However, in a second engine compression stroke, since no action of decompression is effected as shown in FIG.3, C2, energy consumed maintains the same situation as that no decompression device is installed as shown in FIG. 4, D2.

Given the above two situations, it is understood that in the conventional art where only one decompression device is installed, much more less energy consumption can still possibly be obtained for the starting motor to drive the crankshaft for rotation, so that much more less starting torque is required for the engine starting device.

As such, in an attempt to solve the problem, as mentioned above, research and experiments for an "Engine with Decompression Devices" has
been undertaken, eventually resulting in accomplishment of the present invention.

### SUMMARY OF THE INVENTION

An object of the present invention is to provide an integrated engine decompression arrangement, so that less starting torque for an engine starting device is required so as to reduce energy consumption required for the engine starting device to drive a crankshaft.

To achieve the above-mentioned object, the engine with decompression devices, according to the present invention, comprises a cylinder head (20), provided with a camshaft (31), an in intake valve, an exhaust valve (37), an intake rocker arm, and an exhaust rocker arm (34); a crankshaft (10), rotating together with the camshaft (31); an integrated starter and generator (13), rotating together with the crankshaft (10); wherein the integrated starter and generator (13) is arranged at one end of a power output shaft (11) connected with the crankshaft (10), and is located at one end of the crankshaft (10); a control unit, provided for controlling the integrated starter and generator (13); and two decompression devices, arranged on the camshaft (31), including a one-way decompression device (30) and a centrifugal decompression device (40); wherein, when the crankshaft (10) turns reversely, the one-way decompression device (30) acts on either the intake rocker arm or the exhaust rocker arm (34) such that either the intake valve or the exhaust valve (37) is opened for a first tiny valve lift; and that the centrifugal decompression device (40), under a specific rotation speed of the crankshaft (10), acts on either the intake rocker arm or the exhaust rocker arm (34) such that either the intake valve or the exhaust valve (37) is opened for a second tiny valve lift.

According to the present invention, the one-way decompression device or the centrifugal decompression device can be arranged and act on the same intake rocker arm or the same exhaust rocker arm, and that the second tiny valve lift is smaller than the first tiny valve lift.

Further, according to the present invention, after the one-way decompression device rotates reversely and then forward, a decompression action can be effected. This decompression effect can achieve complete decompression in a compression stroke, such cannot be achieved by the centrifugal decompression device. Therefore, according to the present invention, the one-way decompression device is arranged at an exhaust valve lift or an intake valve lift and that the centrifugal decompression device is arranged an exhaust valve lift. To ensure a complete decompression effect performed by the one-way decompression device at the first compression stroke, the valve lift of the one-way decompression device must be greater than that of the centrifugal decompression device.

According to the present invention, the one-way decompression device provides a complete decompression action when the integrated starter and generator drives the crankshaft for rotation at the first engine compression stroke. Thereafter, the decompression cam of the one-way decompression device rotates to a certain position where the decompression action fails. Then at the second and subsequent compression strokes, the decompression action is otherwise provided by the centrifugal decompression device until the engine starts and runs normally and up to a specific rotation speed, then the centrifugal decompression device loses its decompression action. In other words, when the one-way decompression device and the centrifugal decompression device act on different rocker arms (for instance, one is the intake rocker arm and the other is the exhaust rocker arm), both can perform the decompression for the first compression stroke. When the one-way decompression device and the centrifugal decompression device act simultaneously on the same rocker arm, they perform the decompression for the first compression stroke at different time; whereas for the second and subsequent compression strokes, the decompression can only be carried out by the centrifugal decompression device.

Further, according to the present invention, the one-way decompression device can act either on the intake rocker arm or the exhaust rocker arm of the cylinder head so as to open either the intake valve or the exhaust valve. The centrifugal decompression device, however, acts on the exhaust rocker arm of the cylinder head so as to open the exhaust valve.

According to the present invention, the other end of the power output shaft may be arranged with a transmission device.

The present invention is operated in such a manner that when at the moment the integrated starter and generator is started and its forward revolution speed is less than a predetermined rpm, the control unit will output a signal, making the integrated starter and generator at first revolves reversely an angle of some degrees and then revolves forward. When the integrated starter and generator revolves reversely, the one-way decompression device will act on either the intake rocker arm or the exhaust rocker arm of the cylinder head such that either the intake valve or the exhaust valve will be opened for a first tiny valve lift.

According to the present invention, the control unit may be of independent component, or may be integrated with an electronic control unit (ECU) of an overall vehicle.

Further, according to the present invention, wherein the camshaft includes a valve cam, the centrifugal decompression device includes a sprocket, a centrifugal block, a decompression axle, a push rod, and a pre-force member. The sprocket and the valve cam are fixedly arranged on the camshaft; the centrifugal block is pivotally arranged on the sprocket; the decompression axle is arranged passing through the camshaft; the push rod slides in the valve cam; and that the pre-force member pushes against the centrifugal block and the sprocket, respectively. Thereby, when the centrifugal block is subject to a centrifugal force greater than a pre-force of the pre-force member, the push rod will be received in the valve cam completely such that no decompression will act on the engine. However, when the centrifugal block is subject to a centrifugal force less than the pre-force of the pre-force member, the push rod protrudes out of the valve cam, making the exhaust rocker arm swing such that the exhaust valve is opened and that decompression can then be effected.

According to the present invention, the one-way decompression device includes the camshaft, a one-way clutch, a decompression cam, a push member, and a resilient member. The one-way clutch is sleeved to the camshaft; the decompression cam is fixedly arranged on circumference of the one-way clutch and is provided with a stop portion; the push member includes a driving portion and blocking portion; and the resilient member pushes the push member and either the intake rocker arm or the exhaust rocker arm; and when the camshaft turns reversely, the decompression cam drives the push member such that the driving portion pushes against a driven portion of the rocker arm, and the rocker arm turns and pushes the valve to open for the first tiny valve lift and thus causing an engine decompression effect; however when the camshaft turns forward, the stop portion of the decompression cam abuts against the block portion of the push member, and as such, the engine is not subject to a status of decompresison.

Also disclosed is to provide a one-way decompression device installed with a sensing element for detecting location of the push member so as to determine whether or not the engine stands at a status of decompression, and to act as a basis for controlling the integrated starter and generator.

In order to achieve the object of determining whether or not the engine stands at a status of decompression, an engine with decompression devices, according to the present invention, further comprises a sensing element is arranged at an end of the push member, and is connected with the control unit, for detecting location of the push member so as to determine whether or not the engine stands at a status of decompression, and to act as a basis for controlling the integrated starter and generator.

Still further, the sensing element may relate to a Hall sensor. The Hall sensor includes a magnetic element and an induction element, wherein the magnetic element is fixedly arranged on an end of the push member, and the induction element is fixedly arranged on a cylinder-head cover of the cylinder head.

The sensing element may relate to a touch sensor, such as a touch switch, which is fixedly arranged on the cylinder-head cover of the cylinder.

The engine with decompression devices may further include a push member, and a resilient member pushing against the push member; wherein the two decompression devices includes a decompression flange body, fixed arranged on the camshaft (250); the one-way decompression device includes a one-way clutch and a decompression cam, wherein the one-way clutch is sleeved to the decompression flange body, and the decompression cam is fixedly arranged on circumference of the one-way clutch; the centrifugal decompression device includes a centrifugal block and a pre-force member, wherein the centrifugal block is pivotally arranged on the decompression flange body; and the pre-force member pushes against the centrifugal block and the decompression flange body, respectively.

When the camshaft turns reversely, the camshaft will be rotated together and the one-way clutch is coupled to be rotated, making the decompression cam push the push member to act on a driven portion of the rocker arm such that the rocker arm will rotate so as to make the valve opened for a first tiny valve lift. The centrifugal block, under a specific rotation speed of the crankshaft, pushes the push member to act on the driven portion of the rocker arm such that the rocker arm will rotate and the valve is opened for a second tiny valve lift.

Further, acting distance of the second tiny valve lift is smaller than that of the first tiny valve lift. The camshaft is fixedly arranged with two supporting bearings, wherein the one-way decompression device and the centrifugal decompression device are located between the two supporting bearings.

Still further, the push member includes a blocking portion and a first working portion, and that the decompression cam includes a stop portion, such that when the crankshaft rotates reversely, the decompression cam can move the first working portion so as to rotate the rocker arm. When the crankshaft rotates forward, the stop portion of the decompression cam abuts against the blocking portion of the push member such that the one-way decompression device loses its decompression action at this moment.

According to the present invention, the centrifugal block may further be provided with a decompression portion, and that the push member may further be provided with a second working portion. The decompression portion of the centrifugal block can move the second working portion so as to make the push member drive the driven portion of the rocker arm, so that the centrifugal decompression device performs its decompression action.

Further, according to the present invention, the decompression flange body is provided with two positioning surfaces such that the decompression portion of the centrifugal block can move between the two positioning surfaces. Besides, the decompression flange body is located axially to the camshaft, and between the one-way clutch and the centrifugal block.

Other objects, advantages, and novel features of the invention will become more apparent from the following detailed description when taken in conjunction with the accompanying drawings.

### BRIEF DESCRIPTION OF THE DRAWINGS

FIG. 1 is a graph illustrating energy consumption for a starting motor when starting a conventional engine which is not installed with any decompression device;
FIG. 2 is a graph illustrating energy consumption for the starting motor when starting the conventional engine which is installed with a centrifugal decompression device;
FIG. 3 is a graph illustrating energy consumption for a starting motor when starting another conventional engine which is not installed with any decompression device;
FIG. 4 is a graph illustrating energy consumption for the starting motor when starting the another conventional engine which is installed with a one-way decompression device;
FIG. 5 is a cross-sectional view illustrating an engine according to a first embodiment of the present invention;
FIG. 6 is a perspective view illustrating a centrifugal decompression device and a one-way decompression device, both installed in a cylinder head, according to the first embodiment of the present invention;
FIG. 7 is an exploded view illustrating the centrifugal decompression device and the one-way decompression device, both installed in the cylinder head partially cut off, according to the first embodiment of the present invention;
FIG. 8A is a graph illustrating energy consumption when starting an engine, which is not installed with any decompression device;
FIG. 8B is a graph illustrating energy consumption when starting the engine, which is installed with both the centrifugal decompression device and the one-way decompression device, according to the present invention;
FIG. 9 is a perspective view illustrating a centrifugal decompression device and a one-way decompression device, both installed in a cylinder head, according to a second embodiment of the present invention;
FIG. 10 is an exploded view illustrating the centrifugal decompression device and the one-way decompression device, both installed in the cylinder head partially cut off, according to the second embodiment of the present invention;
FIG. 11 is a perspective view illustrating a centrifugal decompression device and a one-way decompression device, both installed in a cylinder head covered with a cylinder-head cover partially cut off, according to a third embodiment of the present invention;
FIG. 12 is a cross-sectional perspective view illustrating the centrifugal decompression device and the one-way decompression device, both installed in the cylinder head covered with the cylinder-head cover, according to the third embodiment of the present invention;
FIG. 13 is an exploded view illustrating the centrifugal decompression device and the one-way decompression device, both installed in the cylinder head partially cut off and with the cylinder-head cover removed and partially cut off, according to the third embodiment of the present invention;
FIG. 14 is a cross-sectional view illustrating the one-way decompression device, which has not yet been operated for decompression, according to the third embodiment of the present invention;
FIG. 15 is a cross-sectional view illustrating the one-way decompression device acting for decompression according to the third embodiment of the present invention;
FIG. 16 is a perspective view illustrating a centrifugal decompression device and a one-way decompression device, both installed in a cylinder head partially cut off, according to a fourth embodiment of the present invention;
FIG. 17 is an exploded view illustrating the centrifugal decompression device and the one-way decompression device, both installed in the cylinder head partially cut off and with a cylinder-head cover removed and partially cut off, according to the fourth embodiment of the present invention;
FIG. 18 is an exploded view illustrating the centrifugal decompression device and the one-way decompression device, both installed in the cylinder head partially cut off according to the fourth embodiment of the present invention;
FIG. 19 is a cross-sectional view illustrating the one-way decompression device, which has not yet been operated for decompression, according to the fourth embodiment of the present invention;
FIG. 20 is a cross-sectional view illustrating the one-way decompression device, which has already been operated for decompression, according to the fourth embodiment of the present invention;
FIG. 21 is a cross-sectional view illustrating the centrifugal decompression device, which has not yet been operated for decompression, according to the fourth embodiment of the present invention; and
FIG. 22 is a cross-sectional view illustrating the centrifugal decompression device, which has already been operated for decompression, according to the fourth embodiment of the present invention.

### DETAILED DESCRIPTION OF THE PREFERRED EMBODIMENT

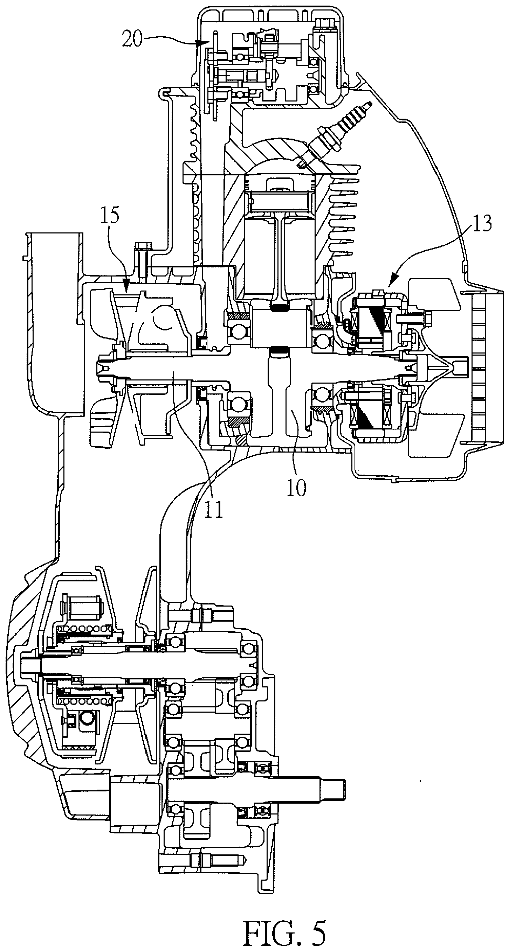

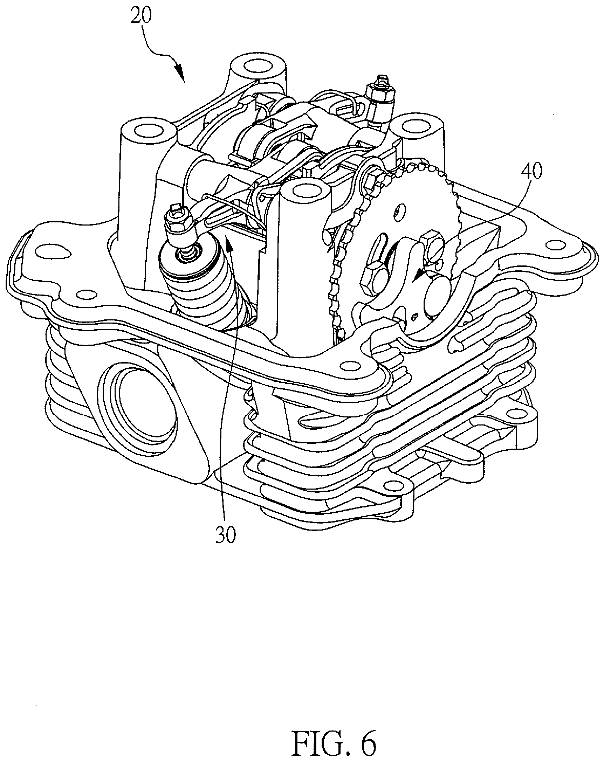

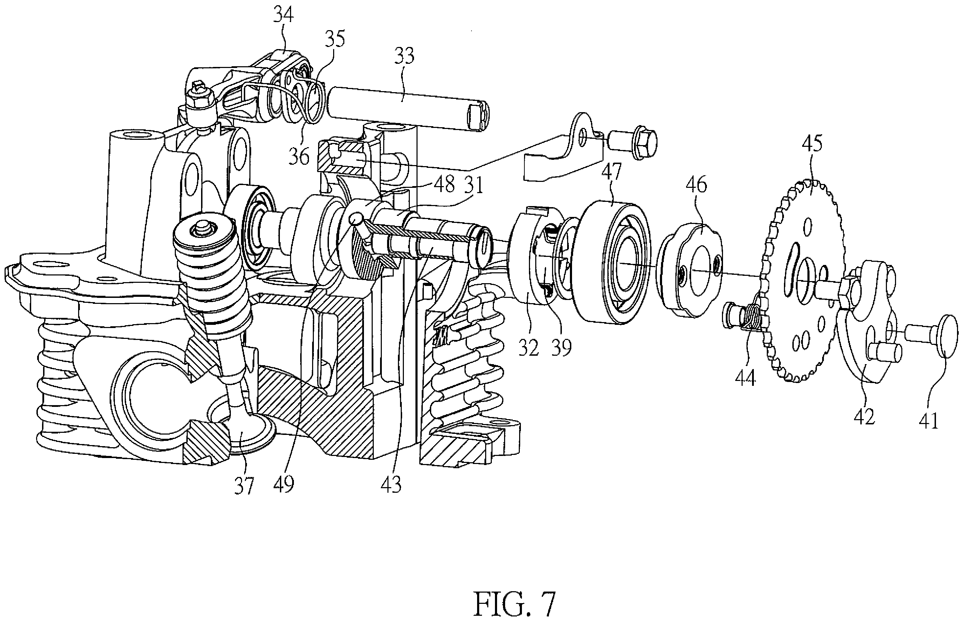

References are made to FIG. 5, a cross-sectional view illustrating an engine according to a first embodiment of the present invention; to FIG. 6, a perspective view illustrating a centrifugal decompression device and a one-way decompression device, both installed in a cylinder head, according to the first embodiment of the present invention; and to FIG. 7, an exploded view illustrating the centrifugal decompression device and the one-way decompression device, both installed in the cylinder head partially cut off. In the first embodiment, an engine with decompression devices comprises a cylinder head 20, a crankshaft 10, an integrated starter and generator 13, a control unit, and two decompression devices. The cylinder head 20 is provided with an intake valve, an exhaust valve 37, an intake rocker arm and an exhaust rocker arm 34. The integrated starter and generator 13 is connected with the crankshaft 10; the control unit is provided for controlling the integrated starter and generator 13; and the two decompression devices are a one-way decompression device 30 and a centrifugal decompression device 40. When the crankshaft 10 turns reversely, the one-way decompression device 30 acts on the exhaust rocker arm 34 such that the exhaust valve 37 is opened for a first tiny valve lift; and that the centrifugal decompression device 40, under a specific rotation speed of the crankshaft 20, also acts on the exhaust rocker arm 34 such that the exhaust valve 37 is opened for a second tiny valve lift, where the second tiny valve lift is less than the first tiny valve lift.

In the first embodiment, details of the one-way decompression device 30 are given as follows: The one-way decompression device 30 includes a camshaft 31, a one-way clutch 39, a decompression cam 32, a push member 35, and a resilient member 36. The one-way clutch 39 is sleeved to the camshaft 31 which is disposed at the cylinder head 20; the decompression cam 32 is fixedly arranged on circumference of the one-way clutch 39; the resilient member 36 pushes on the push member 35 and the exhaust rocker arm 34, respectively; and the exhaust rocker arm 34 is sleeved to a rocker-arm shaft 33. When the camshaft 31 turns forward, the one-way clutch 39 will not couple and rotate with the camshaft 31, so that there is no decompression acting on the engine. However, when the camshaft 31 turns reversely, the one-way clutch 39 will rotate together with the camshaft 31, making the decompression cam 32 rotate together so as to push the push member 35. This will rotate the exhaust rocker arm 34 such that the exhaust valve 37 will be opened for a first tiny valve lift and thus causing an engine decompression effect.

Further, in the first embodiment, details of the centrifugal decompression device 40 are given as follows: The centrifugal decompression device 40 includes the camshaft 31, a valve cam 48, a sprocket 45, a centrifugal block 42, a decompression axle 43, a push rod 49, a pivotal pillar 41, a fixing flange 46, a bearing 47, and a pre-force member 44. The valve cam 48 is fixedly arranged at the camshaft 31 of the cylinder head 20; the pivotal pillar 41 is arranged on the sprocket 45; the centrifugal block 42 is pivotally arranged on the pivotal pillar 41; the decompression axle 43 is arranged passing through the camshaft 31; the push rod 49 slides in the valve cam 48; the pre-force member 44 pushes against the centrifugal block 42 and the sprocket 45, respectively; the fixing flange 46 is arranged to press on the camshaft 31; the sprocket 45 is threadedly attached to the fixing flange 46; and the bearing 47 is sleeved to the camshaft 31. Thereby, when the engine runs and suppose the centrifugal block 42 is subject to a centrifugal force greater than a pre-force of the pre-force member 44, the centrifugal block 42 will drive the decompression axle 43 for rotation so as to slide the push rod 49 into the valve cam 48 completely such that no decompression will act on the engine. However, suppose the centrifugal block 42 is subject to a centrifugal force less than the pre-force of the pre-force member 44, the push rod 49 protrudes out of the valve cam 48, making the exhaust rocker arm 34 swing such that the exhaust valve 37 is opened for a second tiny valve lift and thus effecting a decompression action.

In the first embodiment, the one-way decompression device 30 is arranged at the exhaust valve lift, and that the centrifugal decompression device 40 is also arranged at the exhaust valve lift, and besides, the valve lift of the one-way decompression device 30 is greater than that of the centrifugal decompression device 40 so as to ensure that the one-way decompression device 30 can perform a complete decompression effect at the first engine compression stroke.

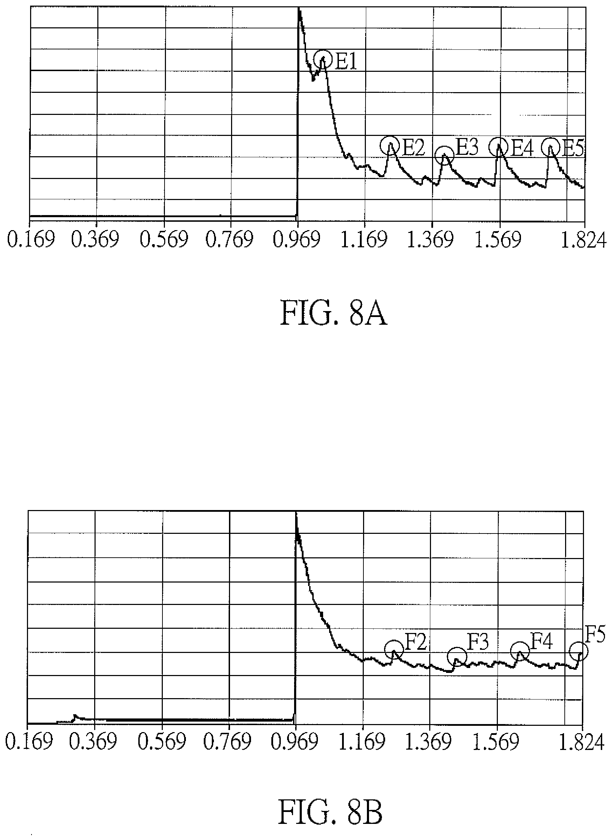

Referring to FIG. 8A, a graph illustrating energy consumption when starting an engine, which is not installed with any decompression device; and to FIG. 8B, a graph illustrating energy consumption when starting the engine, which is installed with both the centrifugal decompression device and the one-way decompression device, according to the present invention, a horizontal axis indicates time driving a crankshaft for rotation; whereas a vertical axis indicates energy consumed to drive the crankshaft for rotation. As shown, line E (E1, E2, E3, E4, E5) stands for an engine not equipped with any decompression device; whereas F (F2, F3, F4, F5) stands for an engine equipped with both the centrifugal decompression device and the one-way decompression device. It is noted that the engine with decompression devices, according to the present invention, indeed can perform a complete decompression effect at the first engine compression stroke (namely E1). The energy consumption required to drive the crankshaft for rotation has been reduced quite a lot (provided by the one-way decompression device); and that the decompression action can also be effected on the second, the third, ... and subsequent compression stroke (provided by the centrifugal decompression device) such that the energy consumption required to drive the crankshaft for rotation has also been reduced. Namely, line E (E2, E3, E4, E5) has been dropped to line F (F2, F3, F4, F5).

In the first embodiment, the integrated starter and generator (ISG) 13 is arranged at one end of a power output shaft 11 connected with the crankshaft 10, and is located at one end of the crankshaft 10, and that the other end of the power output shaft 11 is arranged with a transmission device 15.

Further, the integrated starter and generator 13 is operated in such a manner: When at the moment the integrated starter and generator 13 is started and its forward revolution speed is less than a predetermined rpm, the control unit will output a signal, making the integrated starter and generator 13 at first revolves reversely an angle of some degrees and then revolves forward. When the integrated starter and generator 13 revolves reversely, the one-way decompression device 30 will act on the exhaust rocker arm 34 of the cylinder head 20 such that the exhaust valve 37 will be opened for a first tiny valve lift. In the first embodiment, the control unit may be of independent component, or may be integrated with an electronic control unit (ECU) of an overall vehicle.

Accordingly, in the first embodiment, the one-way decompression device 30 provides a complete decompression action when the integrated starter and generator 13 drives the crankshaft 10 for rotation at the first engine compression stroke. Thereafter, the decompression cam 32 of the one-way decompression device 30 rotates to a certain position where the decompression action fails. Then at the second and subsequent compression strokes, the decompression action is otherwise provided by the centrifugal decompression device 40 until the engine starts and runs normally or up to a specific rotation speed, then the centrifugal decompression device 40 loses its decompression action. In other words, the one-way decompression device 30 acts the decompression at the first engine compression stroke, whereas the decompression action is otherwise performed by the centrifugal decompression device 40 only at the second and subsequent compression strokes. Under such circumstances, the integrated starter and generator 13 requires a much less starting torque and as such, energy consumption required for the integrated starter and generator 13 to drive the crankshaft 10 for rotation can be reduced.

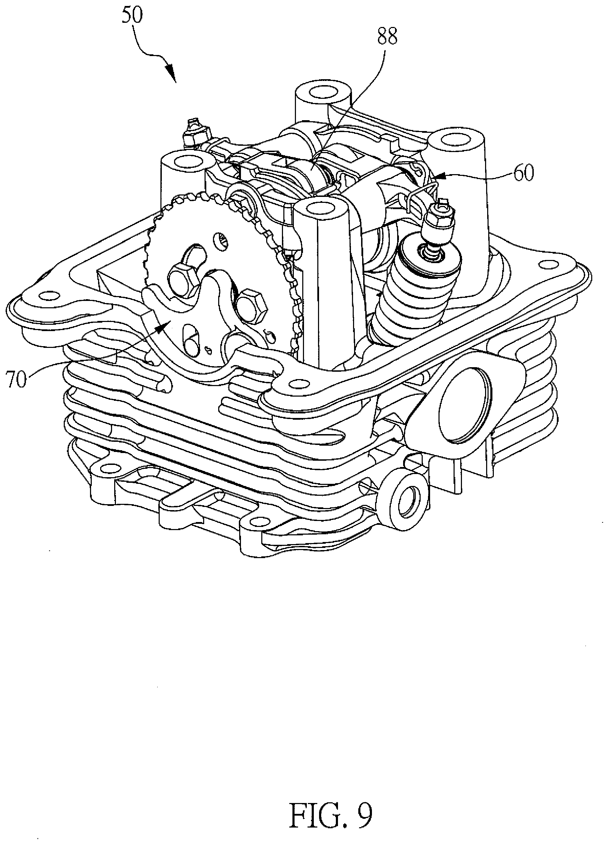

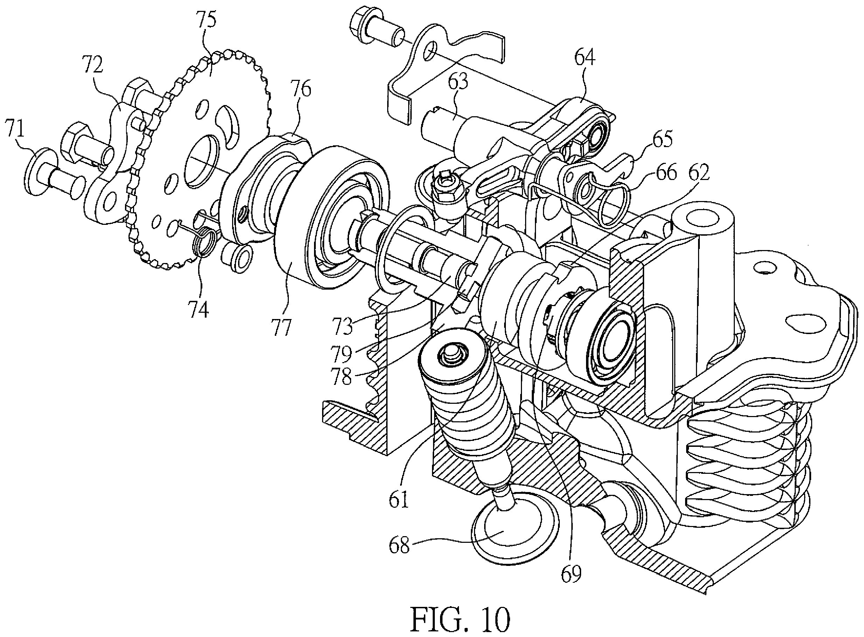

Further referring to FIG. 9, a perspective view illustrating a centrifugal decompression device and a one-way decompression device, both installed in a cylinder head, according to a second embodiment of the present invention; and to FIG. 10, an exploded view illustrating the centrifugal decompression device and the one-way decompression device, both installed in the cylinder head partially cut off; and also to FIG. 5, this embodiment is different from the first embodiment in that in the first embodiment, the one-way decompression device 30 and the centrifugal decompression device 40 are both arranged at the exhaust valve lift, whereas in this second embodiment, a one-way decompression device 60 is arranged at an intake valve lift of a cylinder head 50, and a centrifugal decompression device 70 is arranged at an exhaust valve lift of the cylinder head 50.

As shown in FIGs. 9 and 10, the one-way decompression device 60, in the second embodiment, includes a camshaft 61, a one-way clutch 69, a decompression cam 62, a push member 65, and a resilient member 66. The one-way clutch 69 is sleeved to the camshaft 61 which is disposed at the cylinder head 50; the decompression cam 62 is fixedly arranged on circumference of the one-way clutch 69; the resilient member 66 pushes on the push member 65 and an intake rocker arm 64 which is disposed in the cylinder head 50, respectively; and the intake rocker arm 64 is sleeved to a rocker-arm shaft 63. When the camshaft 61 turns forward, the one-way clutch 69 will not couple and rotate with the camshaft 61, so that there is no decompression acting on the engine. However, when the camshaft 61 turns reversely, the one-way clutch 69 will rotate together with the camshaft 61, making the decompression cam 62 rotate together so as to push the push member 65. This will rotate the intake rocker arm 64 such that an intake valve 68 will be opened for a first tiny valve lift and thus causing an engine decompression effect.

In the second embodiment, the centrifugal decompression device 70 includes the camshaft 61, a valve cam 78, a sprocket 75, a centrifugal block 72, a decompression axle 73, a push rod 79, a pivotal pillar 71, a fixing flange 76, a bearing 77, and a pre-force member 74. The valve cam 78 is fixedly arranged at the camshaft 61 of the cylinder head 50; the pivotal pillar 71 is arranged on the sprocket 75; the centrifugal block 72 is pivotally arranged on the pivotal pillar 71; the decompression axle 73 is arranged passing through the camshaft 61; the push rod 79 slides in the valve cam 78; the pre-force member 74 pushes against the centrifugal block 72 and the sprocket 75, respectively; the fixing flange 76 is arranged to press on the camshaft 61; the sprocket 75 is threadedly attached to the fixing flange 76; and the bearing 77 is sleeved to the camshaft 61. Thereby, when the engine runs and suppose the centrifugal block 72 is subject to a centrifugal force greater than a pre-force of the pre-force member 74, the centrifugal block 72 will drive the decompression axle 73 for rotation so as to slide the push rod 79 into the valve cam 78 completely such that no decompression will act on the engine. However, suppose the centrifugal block 72 is subject to a centrifugal force less than the pre-force of the pre-force member 74, the push rod 79 protrudes out of the valve cam 78, making an exhaust rocker arm 88 swing such that an exhaust valve is opened for a second tiny valve lift and thus effecting a decompression action.

Therefore, in the second embodiment, both the one-way decompression device 60 and the centrifugal decompression device 70 are employed for decompression at the first compression stroke, whereas for decompression at the second and subsequent compression strokes, the centrifugal decompression device 70 solely takes the role. This will make the integrated starter and generator 13 require a much less starting torque and as such, energy consumption required for the integrated starter and generator 13 to drive the crankshaft 10 for rotation can be reduced.

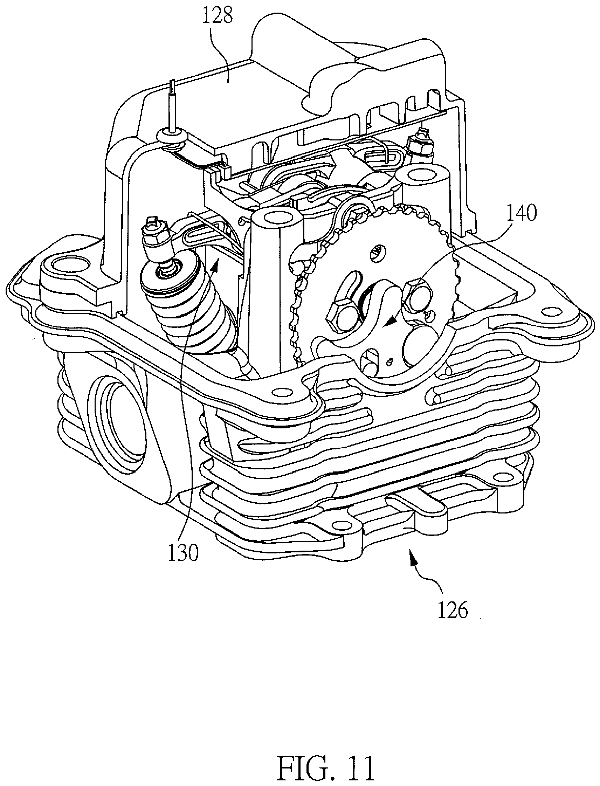

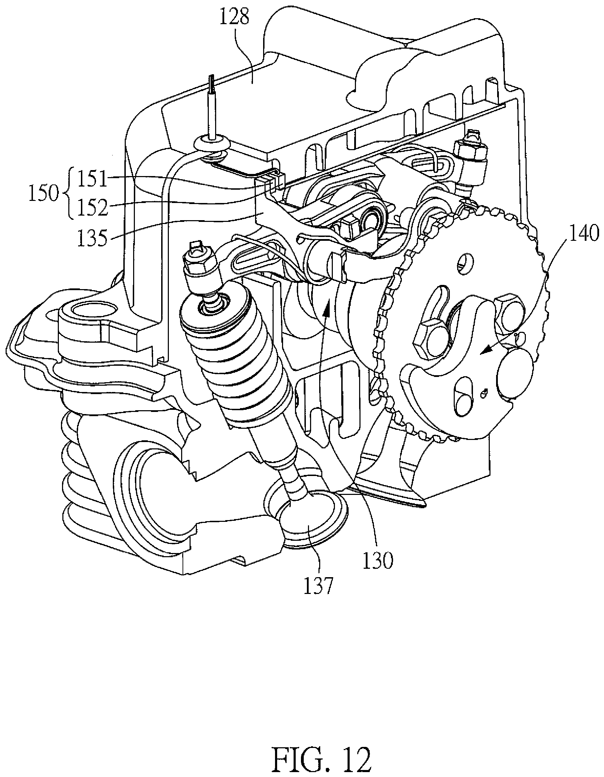

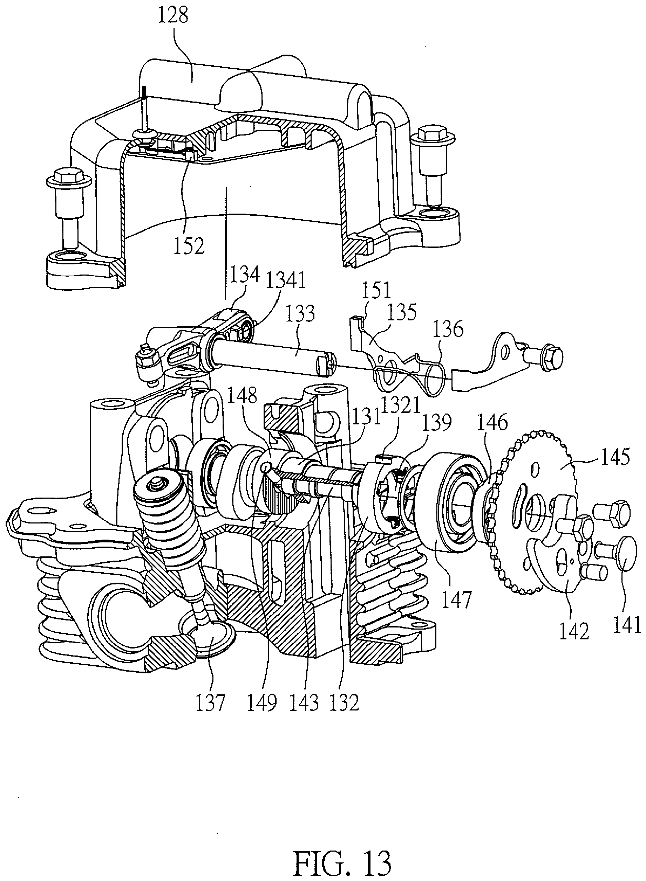

References are made to FIG. 11, a perspective view illustrating a centrifugal decompression device and a one-way decompression device, both installed in a cylinder head covered with a cylinder-head cover partially cut off, according to a third embodiment of the present invention; FIG. 12, a cross-sectional perspective view illustrating the centrifugal decompression device and the one-way decompression device, both installed in the cylinder head covered with the cylinder-head cover; and FIG. 13, an exploded view illustrating the centrifugal decompression device and the one-way decompression device, both installed in the cylinder head partially cut off and with the cylinder-head cover removed and partially cut off; and reference is also made to FIG. 5. In this third embodiment, like in the first embodiment, an engine with decompression devices comprises an integrated starter and generator 13, a crankshaft 10, a power output shaft 11, and a transmission device 15. However, there are differences between them, namely in this third embodiment, a cylinder head 126 is, additionally, equipped with a sensing element; whereas in the first embodiment, as shown in FIG. 5, there is not equipped such sensing element. Accordingly, in the third embodiment, the engine with decompression devices comprises a cylinder head 126, a camshaft 131, the crankshaft 10, the power output shaft 11, the transmission device 15, the integrated starter and generator 13, a control unit, a one-way decompression device 130, a cylinder-head cover 128, a centrifugal decompression device 140, and a sensing element. The cylinder-head cover 128 covers on the cylinder head 126. The integrated starter and generator 13 is connected with the crankshaft 10; the control unit (not shown) is provided for controlling the integrated starter and generator 13; and that the one-way decompression device 130 is arranged in the cylinder head 126. The one-way decompression device 130 includes a one-way clutch 139, a decompression cam 132, a rocker-arm shaft 133, a rocker arm, a push member 135, and a resilient member 136. In this third embodiment, the control unit relate to an electronic control unit (ECU) of a motorcycle.

As shown in FIG. 13, the one-way clutch 139 is sleeved to the camshaft 131 so as to transmit a torque when the camshaft 131 turns reversely. The decompression cam 132 is fixedly arranged on circumference of the one-way clutch 139, and is provided with a stop portion 1321. In this embodiment, the stop portion 1321 relates to an obliquely extended hook-like structure. The push member 135 is pivotally arranged on the rocker-arm shaft 133, and includes a driving portion 1351 and a blocking portion 1352 which are connected successively. In this embodiment, the blocking portion 1352 also relates to a hook-like structure, and is arranged opposite to the stop portion 1321 of the decompression cam 132. The resilient member 136 pushes against the push member 135 and the rocker arm, respectively, such that the push member 135 and the rocker arm turn reversely against each other. In this embodiment, the resilient member 136 relates to a torsion spring, and the rocker arm to an exhaust rocker arm 134.

In the third embodiment, the one-way decompression device 130 is operated in such a manner: When the camshaft 131 turns reversely, the one-way clutch 139 will rotate together therewith, making the decompression cam 132 rotate together such that the decompression cam 132 drives the push member 135. Namely, the push member 135 has its driving portion 1351 pushing against a driven portion 1341 of the exhaust rocker arm 134, so that the exhaust rocker arm 134 turns and pushes an exhaust valve 137 to open for a first tiny valve lift and thus causing an engine decompression effect. Further, if otherwise the camshaft 131 turns forward, the stop portion 1321 of the decompression cam 132 abuts against the block portion 1352 of the push member 135 such that the decompression cam 132 does not drive the push member 135. As such, the driving portion 1351 of the push member 135 does not push against a driven portion 1341 of the exhaust rocker arm 134. Namely, the engine is not subject to a status of decompression.

In this embodiment, the sensing element relates to a Hall sensor 150. The Hall sensor 150 includes a magnetic element 151 and an induction element 152, wherein the magnetic element 151 is fixedly arranged on an end of the push member 135, and the induction element 152 is fixedly arranged on the cylinder-head cover 128. The Hall sensor 150 is connected with the control unit for detecting the location of the push member 135 so as to determine whether or not the engine stands at a status of decompression. Of course, the sensing element may relate to a touch sensor which is fixedly arranged on the cylinder-head cover 128 and which is connected with the control unit. Likewise, the touch sensor detects location of the push member 135 so as to determine whether or not the engine stands at a status of decompression.

In the third embodiment, details of the centrifugal decompression device 140 are given as follows: The centrifugal decompression device 140 includes the camshaft 131, a valve cam 148, a sprocket 145, a centrifugal block 142, a decompression axle 143, a push rod 149, a pivotal pillar 141, a fixing flange 146, a bearing 147, and a pre-force member (not shown). The valve cam 148 is fixedly arranged on the camshaft 131; the pivotal pillar 141 is arranged on the sprocket 145; the centrifugal block 142 is pivotally arranged on the pivotal pillar 141; the decompression axle 143 is arranged passing through the camshaft 131; the push rod 149 slides in the valve cam 148; and that the pre-force member pushes against the centrifugal block 142 and the sprocket 145, respectively; the fixing flange 146 is arranged to press on the camshaft 131; the sprocket 145 is threadedly attached to the fixing flange 146; and the bearing 147 is sleeved to the camshaft 131. Thereby, when the engine runs and suppose the centrifugal block 142 is subject to a centrifugal force greater than a pre-force of the pre-force member, the centrifugal block 142 will drive the decompression axle 143 for rotation so as to slide the push rod 149 into the valve cam 148 completely such that no decompression will act on the engine. However, suppose the centrifugal block 142 is subject to a centrifugal force less than the pre-force of the pre-force member, the push rod 149 protrudes out of the valve cam 148, making the exhaust rocker arm 134 swing such that the exhaust valve 137 is opened for a tiny valve lift and thus effecting a decompression action.

In the third embodiment, the one-way decompression device 130 is arranged at an exhaust valve lift of the cylinder head 126, and that the centrifugal decompression device 140 is also arranged at the exhaust valve lift of the cylinder head 126, and besides, the valve lift of the one-way decompression device 130 is greater than that of the centrifugal decompression device 140 so as to ensure that the one-way decompression device 130 can perform a complete decompression effect at the first engine compression stroke.

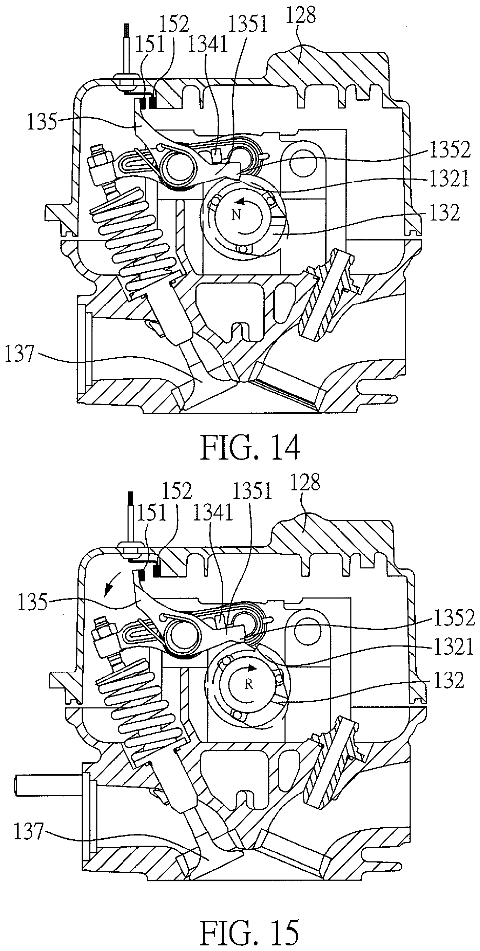

Referring to FIG. 14, a cross-sectional view illustrating the one-way decompression device, which has not yet been operated for decompression, according to the third embodiment of the present invention; and also to FIG. 13, upon a forward rotation (N) of the camshaft 131, the one-way clutch 139, basically, will not couple and rotate together therewith. However, because an inevitable friction between the camshaft 131 and body and rollers of the one-way clutch 139, the one-way clutch 139 will rotate forward slightly. As a result, the stop portion 1321 of the decompression cam 132 of one-way clutch 139 will rotate together. This will make the stop portion 1321 turn, gradually, to contact and push against the block portion 1352 of the push member 135, so that the stop portion 1321, the one-way clutch 139, and the decompression cam 132 are kept still. At this moment, there is no decompression acting on the engine. The magnetic element 151, which is fixedly arranged at another end of the block portion 1352 of the push member 135, and the induction element 152, which is fixedly arranged on the cylinder-head cover 128, will be mutually inducted. Under the circumstances, since the control unit is connected with the Hall sensor 150, such signal will be received and that the engine standing not in the status of decompression will be perceived.

Further referring to FIG. 15, a cross-sectional view illustrating the one-way decompression device acting for decompression according to the third embodiment of the present invention, and also to FIG. 13, when the camshaft 131 turns reversely (R), the one-way clutch 139 will rotate synchronously with the decompression cam 132 thereon, making the decompression cam 132 pushes outward against the block portion 1352 of the push member 135 such that the driving portion 1351 pushes, correspondingly, against the driven portion 1341 at side of the exhaust rocker arm 134 so as to rotate the exhaust rocker arm 134 eventually. This rotation of the exhaust rocker arm 134 also indicates that the exhaust valve 137 will open for a tiny valve lift and thus achieving an engine decompression effect. At this moment, because the magnetic element 151, which is fixedly arranged on the other end of the block portion 1352 of the push member 135, has turned a certain angle, an induction with the induction element 152 will vary. As such, the control unit can perceive that the engine is standing in the status of decompression.

Therefore, according to the third embodiment, the push member 135 of the one-way decompression device 130 is provided with a sensing element which can detect the location of the push member 135 so as to determine whether or not the engine stands at a status of decompression, which provides a basis for controlling the action of the integrated starter and generator 13.

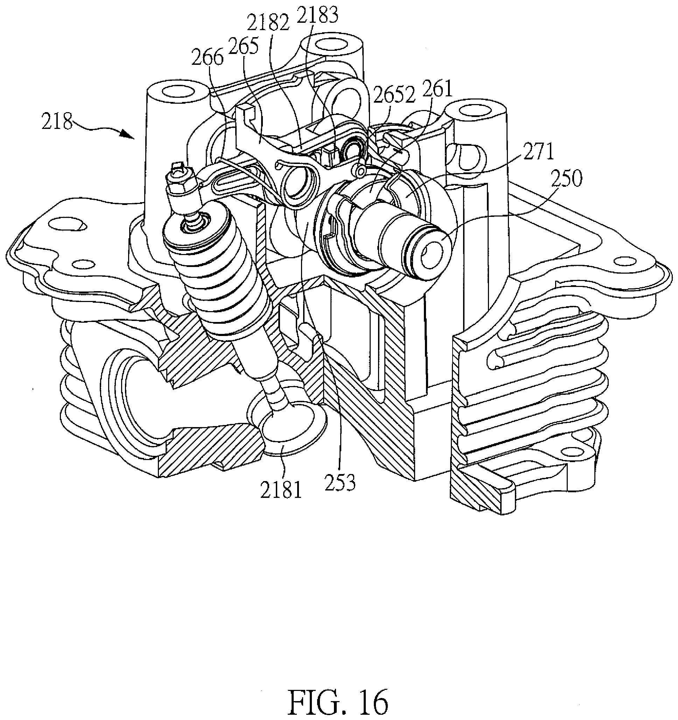

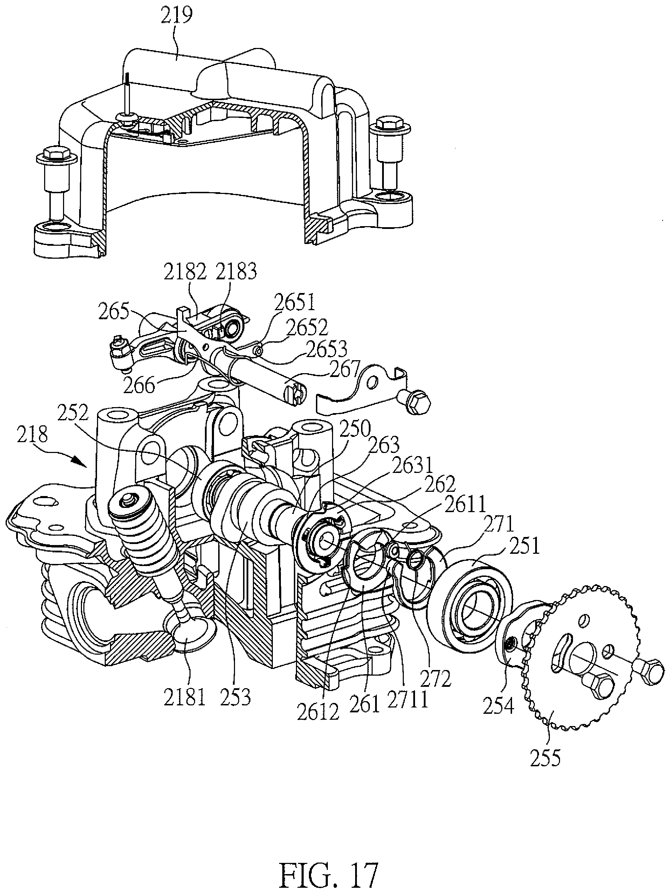

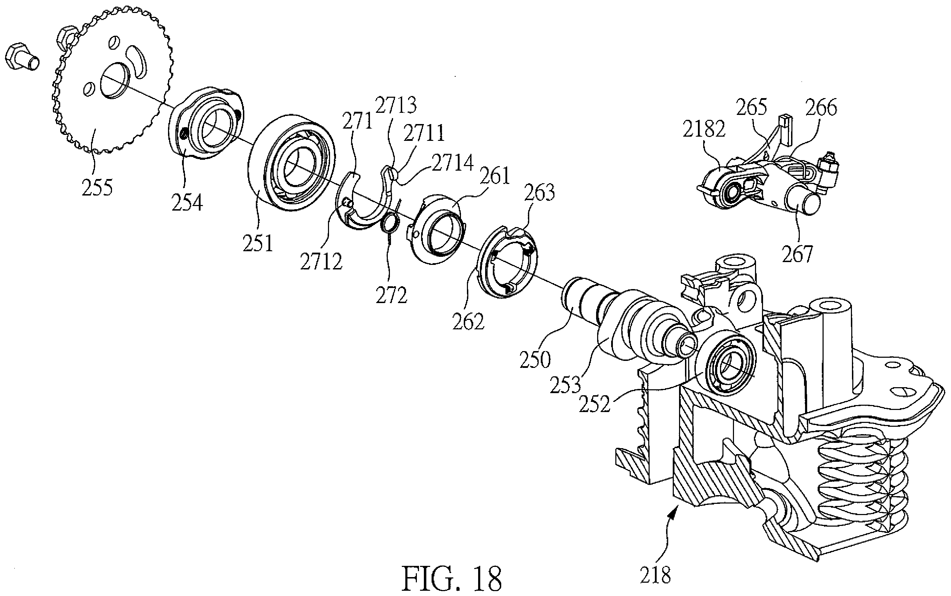

Now references are made to FIG. 16, a perspective view illustrating a centrifugal decompression device and a one-way decompression device, both installed in a cylinder head partially cut off, according to a fourth embodiment of the present invention; and FIG. 17 an exploded view illustrating the centrifugal decompression device and the one-way decompression device, both installed in the cylinder head partially cut off and with a cylinder-head cover removed and partially cut off; and FIG. 18, an exploded view illustrating the centrifugal decompression device and the one-way decompression device, both installed in the cylinder head partially cut off; and also reference is made to FIG. 5. In this fourth embodiment, like in the first embodiment shown in FIG. 5, an engine with decompression devices comprises an integrated starter and generator 13, a crankshaft 10, a power output shaft 11, and a transmission device 15. However, there are differences between them, namely in this fourth embodiment, a cylinder head 218 differs from the cylinder head 20 of the first embodiment shown in FIG. 5. Accordingly, in the fourth embodiment, the engine with decompression devices comprises the cylinder head 218, the crankshaft 10, the integrated starter and generator 13, a camshaft 250, and two decompression devices. The cylinder head 218 is provided with a valve 2181 and a rocker arm 2182. The camshaft 250 rotates together with the crankshaft 10, and is arranged on the cylinder head 218. The camshaft 250 is provided with two supporting bearings 251, 252. The two decompression devices are arranged on the camshaft 250, and are located between the two supporting bearings 251, 252. The two decompression devices include a one-way decompression device and a centrifugal decompression device, which act on the rocker arm 2182, respectively, such that each makes the valve 2181 open for a tiny valve lift.

As shown in FIG. 17, in the fourth embodiment, the cylinder head 218 is provided, above, with cylinder-head cover 219; and that the camshaft 250 is supported with the two supporting bearings 251,252, a decompression flange body 261, a valve cam 253, a fixing flange 254, and a sprocket 255. The one-way decompression device and the centrifugal decompression device are located between the two supporting bearings 251, 252 of the camshaft 250, and between the valve cam 253 and the supporting bearing 251. The one-way decompression device includes a one-way clutch 262 and a decompression cam 263. The one-way clutch 262 is sleeved to the decompression flange body 261. The decompression cam 263 is fixedly arranged on circumference of the one-way clutch 262, and is provided with a stop portion 2631. Further, the centrifugal device includes a centrifugal block 271 and a pre-force member 272. The centrifugal block 271 is provided with a decompression portion 2711, and that the pre-force member 272 pushes against the centrifugal block 271 and the decompression flange body 261, respectively. The pre-force member 272 can make the centrifugal block 271 under a specific rotation speed so as to keep the centrifugal decompression device standing at a decompression situation. Besides, the decompression flange body 261 is provided with two positioning surfaces 2611, 2612 such that the decompression portion 2711 of the centrifugal block 271 can move between the two positioning surfaces 2611, 2612 following its rotational angles.

As shown in FIG. 18, the centrifugal block 271 is of C-like configuration, and includes the decompression portion 2711 having two positioning surfaces 2713, 2714, and a rotational shaft 2712 which is incorporated with the decompression flange body 261 for rotational purpose of the centrifugal block 271. Further, the two positioning surfaces 2713, 2714 of the decompression portion 2711 correspond to the two positioning surfaces 2611, 2612 of the decompression flange body 261 so as to restrict the centrifugal block 271 a throwing-off or closing-up angle. Besides, when below a specific engine rotation speed, the decompression portion 2711 (i.e. in a closing-up status) can move the rocker arm 2182 to open the valve 2181 so as to effect decompression; however, when above the specific engine rotation speed, the decompression portion 2711 cannot move the rocker arm 2182 and thus there is no decompression effected.

Further, the rocker arm 2182 is sleeved to a rocker-arm shaft 267, and that the rocker-arm shaft 267 is arranged with a push member 265. The push member 265 is provided, at its one end, with a blocking portion 2651 such that when the crankshaft 10 rotates forward (i.e. there is no decompression effected), the blocking portion 2651 can abut against the stop portion 2631 of the decompression cam 263. Further, the push member 265 is formed, beneath the blocking portion 2651, with a first working portion 2653 such that when the crankshaft 10 rotates reversely (i.e. there is decompression effected), the decompression cam 263 can move the first working portion 2653 so as to rotate the rocker arm 2182. In addition, the push member 265 is provided, beside the blocking portion 2651, with a circular pillar, acting as a second working portion 2652, such that when the crankshaft 10 rotates below a specific rotation speed (i.e. there is decompression effected), the decompression portion 2711 of the centrifugal block 271 can move the second working portion 2652 so as to rotate the rocker arm 2182. In this fourth embodiment, the decompression flange body 261 is located axially to the camshaft 250, and between the one-way clutch 262 and the centrifugal block 271.

Further, a resilient member 266 is sleeved to the rocker-arm shaft 267, where the resilient member 266 pushes against the push member 265 and the rocker arm 2182 so as to provide a pre-force. The rocker arm 2182 is provided with a driven portion 2183 such that the push member 265 can move the driven portion 2183 so as to rotate the rocker arm 2182.

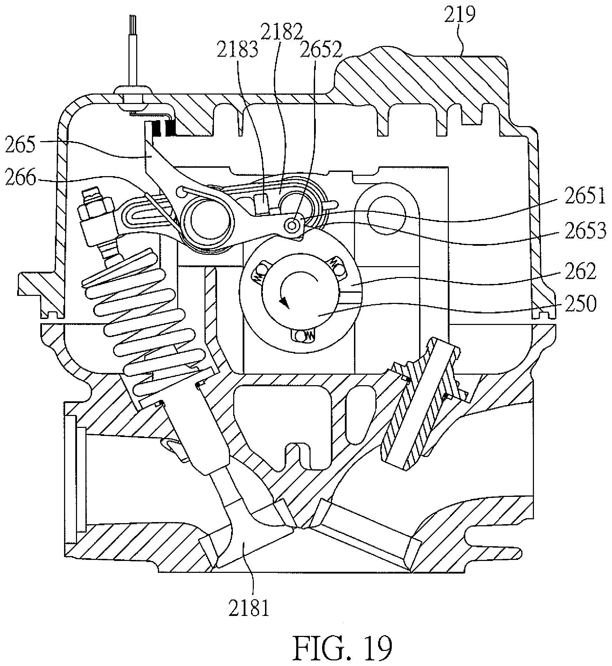

Referring to FIG. 19, a cross-sectional view illustrating the one-way decompression device, which has not yet been operated for decompression, according to the fourth embodiment of the present invention; and also to FIG. 17 and FIG. 18, when the crankshaft 10 of the one-way decompression device rotates forward, the blocking portion 2651 of the push member 265 pushes against the stop portion 2631 of the decompression cam 263, however the driven portion 2183 of the rocker arm 2182 is not moved by the push member 265, and thus there is no decompression effected.

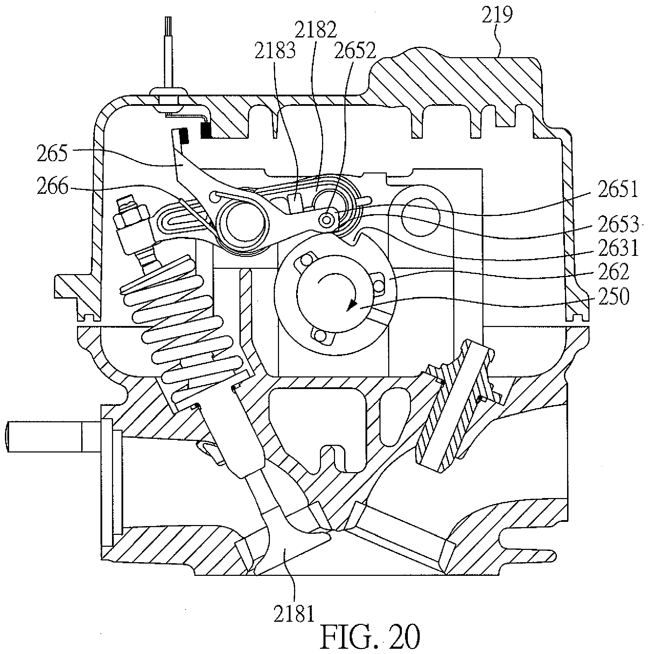

Now referring to FIG. 20, a cross-sectional view illustrating the one-way decompression device, which has already been operated for decompression, according to the fourth embodiment of the present invention; and also to FIG. 17 and FIG. 18, when the crankshaft 10 of the one-way decompression device rotates reversely, the stop portion 2631 of the decompression cam 263 escapes from the blocking portion 2651 of the push member 265, the decompression cam 263 can therefore move the first working portion 2653 of the push member 265 such that the push member 265 can then move the driven portion 2183 of the rocker arm 2182 so as to rotate the rocker arm 2182, making the valve 2181 open for a first tiny valve lift and that decompression will be effected at the first compression stroke of a next engine start.

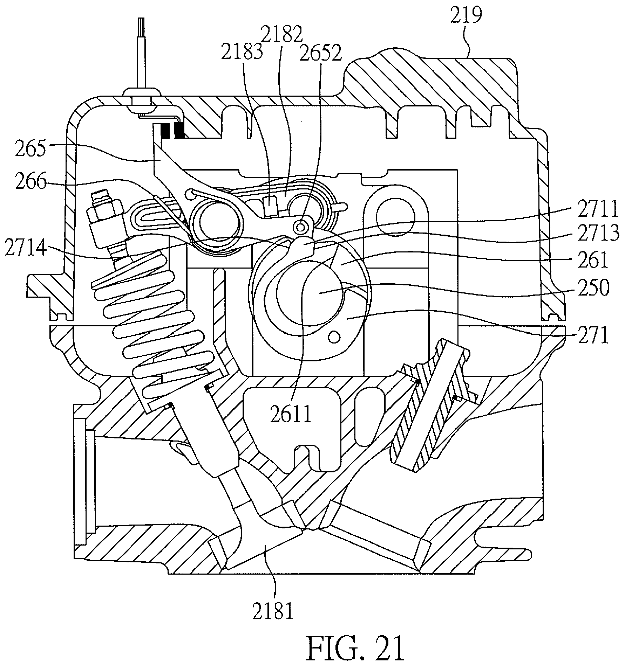

Referring to FIG. 21, a cross-sectional view illustrating the centrifugal decompression device, which has not yet been operated for decompression, according to the fourth embodiment of the present invention; and also to FIG. 17 and FIG. 18, when the crankshaft 10 of the centrifugal decompression device rotates higher than a specific rotation speed, the centrifugal block 271 is at a throwing-off status, making the positioning surface 2714 of the decompression portion 2711 of the centrifugal block 271 pushes against each other with the positioning surface 2612 of the decompression flange body 261. Under such circumstances, the decompression portion 2711 of the centrifugal block 271 does not move the second working portion 2652 of the push member 265, so that the rocker arm 2182 does not rotate and that there is no decompression effected.

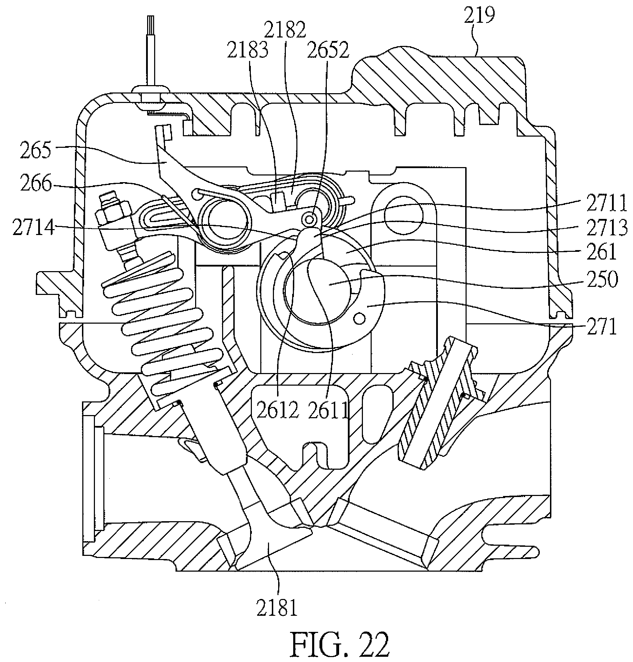

Further referring to FIG. 22, a cross-sectional view illustrating the centrifugal decompression device, which has already been operated for decompression, according to the fourth embodiment of the present invention; and also to FIG. 17 and FIG. 18, when the crankshaft 10 of the centrifugal decompression device rotates lower than the specific rotation speed, the centrifugal block 271 is at a closing-up status, making the positioning surface 2713 of the decompression portion 2711 of the centrifugal block 271 pushes against each other with the positioning surface 2611 of the decompression flange body 261. Under such circumstances, the decompression portion 2711 of the centrifugal block 271 moves the second working portion 2652 of the push member 265 so as to act on the driven portion 2183 of the rocker arm 2182 such that the rocker arm 2182 rotates, and that the valve 2181 opens for a second tiny valve lift and thus there is decompression effected.

In this fourth embodiment, both the one-way decompression device and the centrifugal decompression device act on the rocker arm 2182 located at an exhaust side of the cylinder head 218, where the one-way decompression device makes the valve 2181 at the exhaust side open for a first tiny valve lift; whereas the centrifugal decompression device makes the valve 2181 at the exhaust side open for a second tiny valve lift. In order to have the one-way decompression device exert a complete decompression effect at the first compression stroke, the first tiny valve lift of the one-way decompression device should be larger than the second tiny valve lift of the centrifugal decompression device, and that the two decompression devices should not move the push member 265 at the same time.

Further, in the fourth embodiment, the one-way decompression device provides the integrated starter and generator 13 to drive the crankshaft 10 for rotation so as to achieve the purpose of complete decompression at the first compression stroke. Thereafter, the decompression cam 263 of the one-way decompression device rotates to a certain position and then the decompression loses its function. The decompression action at the second and subsequent compression strokes are provided by the centrifugal decompression device until the engine starts and runs normally to above a specific rotation speed, and thereafter the centrifugal decompression device loses the decompression function. Namely, the one-way decompression device serves to provide decompression at the first compression stroke, whereas the centrifugal decompression device serves to provide the decompression only at the second and subsequent compression strokes. This will make the integrated starter and generator 13 require a much less starting torque and as such, energy consumption required for the integrated starter and generator 13 to drive the crankshaft 10 for rotation can be reduced.

Therefore, the engine with decompression devices, according to the fourth embodiment of the present invention, can reduce the number of components so as to reduce the cost. Moreover, because the number of components is reduced, so that assembly thereof becomes much easier and that labor and time can be saved.

Although the present invention has been explained in relation to its preferred embodiments, it is to be understood that many other possible modifications and variations can be made without departing from the scope of the invention as hereinafter claimed.

## Claims

1. An engine with decompression devices, comprising:
a cylinder head (20), provided with a camshaft (31,131), an intake valve, an exhaust valve (37), an intake rocker arm, and an exhaust rocker arm(34), the camshaft (31,131) includes a valve cam (48);
a crankshaft (10), configured to rotate together with the camshaft (31,131);
an integrated starter and generator (13), configured to rotate together with the crankshaft (10); wherein the integrated starter and generator (13) is arranged at one end of a power output shaft (11) connected with the crankshaft (10), and is located at one end of the crankshaft (10);
a control unit, provided for controlling the integrated starter and generator (13); and
two decompression devices, arranged on the camshaft (31,131), including a one-way decompression device (30,130) and a centrifugal decompression device (40); wherein the one-way decompression device (130) includes a one-way clutch (139), a decompression cam (132), a push member (135), and a resilient member (136); and the one-way clutch (139) is sleeved to the camshaft (131); the decompression cam (132) is fixedly arranged on circumference of the one-way clutch (139) and is provided with a stop portion (1321); the push member (135) includes a driving portion (1351) and a blocking portion (1352); and the resilient member (136) pushes the push member (135) and either the intake rocker arm or the exhaust rocker arm (134); wherein the centrifugal decompression device (40) includes a sprocket (45), a centrifugal block (42), a decompression axle (43), a push rod (49), and a pre-force member (44); the sprocket (45) and the valve cam (48) are fixedly arranged on the camshaft (31); the centrifugal block (42) is pivotally arranged on the sprocket (45); the decompression axle (43) is arranged passing through the camshaft (31); the push rod (49) slides in the valve cam (48); and the pre-force member (44) pushes against the centrifugal block (42) and the sprocket (45), respectively;
wherein, when the crankshaft (10) and the camshaft (131) turns reversely, the decompression cam (132) drives the push member (135) such that the driving portion (1351) pushes against a driven portion (1341) of the rocker arm (134), and the rocker arm (134) turns and pushes the valve (137) to open for a first tiny valve lift and thus causing an engine decompression effect; however when the camshaft (131) turns forward, the stop portion (1321) of the decompression cam (132) abuts against the block portion (1352) of the push member (135), and as such, the engine is not subject to a status of decompression, and the centrifugal decompression device (40), under a specific rotation speed of the crankshaft (10), acts on either the intake rocker arm or the exhaust rocker arm (34) such that either the intake valve or the exhaust valve (37) is opened for a second tiny valve lift.

2. The engine with decompression devices as claimed in claim 1, wherein the one-way decompression device (30) is configured to act on the exhaust rocker arm (34) such that the exhaust valve (37) is opened for a first tiny valve lift; and the centrifugal decompression device (40) is configure to act on the exhaust rocker arm (34) such that the exhaust valve (37) is opened for a second tiny valve lift; and the second tiny valve lift is smaller than the first tiny valve lift.

3. The engine with decompression devices as claimed in claim 1, wherein when at the moment the integrated starter and generator (13) is started and its forward revolution speed is less than a predetermined rpm, the control unit is configure to output a signal, making the integrated starter and generator (13) at first revolves reversely an angle of some degrees and then revolves forward.

4. The engine with decompression devices as claimed in claim 1, wherein, a sensing element is arranged at an end of the push member (135), and is connected with the control unit, for detecting location of the push member (135) so as to determine whether or not the engine stands at a status of decompression.

5. The engine with decompression devices as claimed in claim 4, wherein the sensing element relates to a Hall sensor (150), and includes a magnetic element (151) and an induction element (152); the magnetic element (151) is fixedly arranged on the end of the push member (135), and the induction element (152) is fixedly arranged on a cylinder-head cover (128) of the cylinder head (126).

6. The engine with decompression devices as claimed in claim 4, wherein the sensing element relates to a touch sensor which is fixedly arranged on the cylinder-head cover (128) of the cylinder head (126).

## Patentansprüche

1. Motor mit Dekompressionsvorrichtungen, umfassend:
einen Zylinderkopf (20), der mit einer Nockenwelle (31, 131), einem Einlassventil, einem Auslassventil (37), einem Einlasskipphebel und einem Auslasskipphebel (34) versehen ist, wobei die Nockenwelle (31, 131) einen Ventilnocken (48) aufweist;
eine Kurbelwelle (10), die dazu ausgelegt ist, sich zusammen mit der Nockenwelle (31, 131) zu drehen;
einen integrierten Anlasser und Generator (13), der dazu ausgelegt ist, sich zusammen mit der Kurbelwelle (10) zu drehen; wobei der integrierte Anlasser und Generator (13) an einem Ende einer mit der Kurbelwelle (10) verbundenen Abtriebswelle (11) angeordnet ist und sich an einem Ende der Kurbelwelle (10) befindet;
eine Steuereinheit, die zum Steuern des integrierten Anlassers und Generators (13) vorgesehen ist; und
zwei Dekompressionsvorrichtungen, die auf der Nockenwelle (31, 131) angeordnet sind und eine Einwegdekompressionsvorrichtung (30, 130) und eine Zentrifugaldekompressionsvorrichtung (40) aufweisen; wobei die Einwegdekompressionsvorrichtung (130) eine Einwegkupplung (139), einen Dekompressionsnocken (132), ein Druckelement (135) und ein elastisches Element (136) umfasst; und die Einwegkupplung (139) mit der Nockenwelle (131) verbunden ist; der Dekompressionsnocken (132) fest am Umfang der Einwegkupplung (139) angeordnet ist und mit einem Anschlagabschnitt (1321) versehen ist; das Druckelement (135) einen Antriebsabschnitt (1351) und einen Sperrabschnitt (1352) aufweist; und das elastische Element (136) das Druckelement (135) und entweder den Einlasskipphebel oder den Auslasskipphebel (134) drückt; wobei die Zentrifugaldekompressionsvorrichtung (40) ein Kettenrad (45), einen Zentrifugalblock (42), eine Dekompressionsachse (43), eine Schubstange (49) und ein Vorspannelement (44) umfasst; das Kettenrad (45) und der Ventilnocken (48) fest auf der Nockenwelle (31) angeordnet sind; der Zentrifugalblock (42) schwenkbar auf dem Kettenrad (45) angeordnet ist; die Dekompressionsachse (43) durch die Nockenwelle (31) hindurchgehend angeordnet ist; die Schubstange (49) in dem Ventilnocken (48) gleitet; und das Vorspannelement (44) gegen den Zentrifugalblock (42) bzw. das Kettenrad (45) drückt;
wobei, wenn sich die Kurbelwelle (10) und die Nockenwelle (131) rückwärts drehen, der Dekompressionsnocken (132) das Druckelement (135) so antreibt, dass der antreibende Abschnitt (1351) gegen einen angetriebenen Abschnitt (1341) des Kipphebels (134) drückt, und der Kipphebel (134) sich dreht und das Ventil (137) drückt, um sich für einen ersten winzigen Ventilhub zu öffnen und somit eine Motordekompressionswirkung zu verursachen; wenn die Nockenwelle (131) sich jedoch vorwärts dreht, der Anschlagabschnitt (1321) des Dekompressionsnockens (132) an den Blockabschnitt (1352) des Druckelement (135) stößt, sodass der Motor nicht einem Dekompressionszustand unterworfen ist, und die Zentrifugaldekompressionsvorrichtung (40) bei einer bestimmten Drehzahl der Kurbelwelle (10) entweder auf den Einlasskipphebel oder den Auslasskipphebel (34) wirkt, sodass entweder das Einlassventil oder das Auslassventil (37) für einen zweiten winzigen Ventilhub geöffnet wird.

2. Motor mit Dekompressionsvorrichtungen gemäß Anspruch 1, wobei die Einwegdekompressionsvorrichtung (30) dazu ausgelegt ist, auf den Auslasskipphebel (34) zu wirken, sodass das Auslassventil (37) für einen ersten winzigen Ventilhub geöffnet wird; und die Zentrifugaldekompressionsvorrichtung (40) dazu ausgelegt ist, auf den Auslasskipphebel (34) zu wirken, sodass das Auslassventil (37) für einen zweiten winzigen Ventilhub geöffnet wird; und der zweite winzige Ventilhub kleiner als der erste winzige Ventilhub ist.

3. Motor mit Dekompressionsvorrichtungen gemäß Anspruch 1, wobei die Steuereinheit dazu ausgelegt ist, wenn der integrierte Anlasser und Generator (13) gestartet wird und seine Vorwärtsdrehzahl unterhalb einer vorbestimmten Drehzahl liegt, ein Signal ausgibt, das den integrierten Starter und Generator (13) dazu veranlasst, zunächst um einen Winkel von einigen Grad rückwärts zu drehen und dann vorwärts zu drehen.

4. Motor mit Dekompressionsvorrichtungen gemäß Anspruch 1, wobei ein Erfassungselement an einem Ende des Druckelements (135) angeordnet und mit der Steuereinheit verbunden ist, um die Position des Druckelements (135) zu erfassen, um zu bestimmen, ob sich der Motor in einem Dekompressionszustand befindet oder nicht.

5. Motor mit Dekompressionsvorrichtungen gemäß Anspruch 4, wobei das Erfassungselement ein Hall-Sensor (150) ist und ein magnetisches Element (151) und ein Induktionselement (152) umfasst; das magnetische Element (151) fest am Ende des Druckelements (135) angeordnet ist und das Induktionselement (152) fest an einem Zylinderkopfdeckel (128) des Zylinderkopfs (126) angeordnet ist.

6. Motor mit Dekompressionseinrichtungen gemäß Anspruch 4, wobei das Erfassungselement ein Berührungssensor ist, der fest an dem Zylinderkopfdeckel (128) des Zylinderkopfs (126) angeordnet ist.

## Revendications

1. Moteur avec dispositifs de décompression, comprenant :
une culasse de cylindre (20), pourvue d'un arbre à came (31, 131), une soupape d'admission, une soupape d'échappement (37), un culbuteur d'admission, et un culbuteur d'échappement (34), l'arbre à came (31, 131) incluant une came de soupape (48) ;
un arbre à manivelle (10), configuré pour entrer en rotation conjointement avec l'arbre à came (31, 131) ;
un démarreur-générateur intégré (13), configuré pour entrer en rotation conjointement avec l'arbre à manivelle (10) ; dans lequel le démarreur-générateur intégré (13) est agencé à une extrémité d'un arbre de sortie de puissance (11) relié à l'arbre à manivelle (10), et est situé à une extrémité de l'arbre à manivelle (10) ;
une unité de commande, prévue pour commander le démarreur-générateur intégré (13) ; et
deux dispositifs de décompression, agencés sur l'arbre à came (31, 131), incluant un dispositif de décompression unidirectionnel (30, 130) et un dispositif de décompression centrifuge (40) ; dans lequel le dispositif de décompression unidirectionnel (130) inclut un embrayage unidirectionnel (139), une came de décompression (132), un organe de poussée (135), et un organe résilient (136) ; et l'embrayage unidirectionnel (139) est emmanché sur l'arbre à came (131) ; la came de décompression (132) est agencée de façon fixe sur la circonférence de l'embrayage unidirectionnel (139) et est pourvue d'une partie butée (1321) ; l'organe de poussée (135) inclut une partie d'entraînement (1351) et une partie de blocage (1352) ; et l'organe résilient (136) pousse l'organe de poussée (135) et le culbuteur d'admission ou le culbuteur d'échappement (134) ; dans lequel le dispositif de décompression centrifuge (40) inclut une roue dentée (45), un bloc centrifuge (42), un axe de décompression (43), une tige de poussée (49), et un organe de pré-force (44) ; la roue dentée (45) et la came de soupape (48) sont agencées de façon fixe sur l'arbre à came (31) ; le bloc centrifuge (42) est agencé de façon pivotante sur la roue dentée (45) ; l'axe de décompression (43) est agencé de façon passant à travers l'arbre à came (31) ; la tige de poussée (49) coulisse dans la came de soupape (48) ; et l'organe de pré-force (44) pousse contre le bloc centrifuge (42) et la roue dentée (45), respectivement ;
dans lequel, lorsque l'arbre à manivelle (10) et l'arbre à came (131) tournent vers l'arrière, la came de décompression (132) entraîne l'organe de poussée (135) de telle sorte que la partie d'entraînement (1351) pousse contre une partie entraînée (1341) du culbuteur (134), et le culbuteur (134) tourne et pousse la soupape (137) pour s'ouvrir pour une première toute petite levée de soupape et ainsi causant un effet de décompression de moteur ; cependant, lorsque l'arbre à came (131) tourne vers l'avant, la partie butée (1321) de la came de décompression (132) prend appui contre la partie de blocage (1352) de l'organe de poussée (135), et ainsi, le moteur n'est pas soumis à un état de décompression, et le dispositif de décompression centrifuge (40), sous une vitesse de rotation spécifique de l'arbre à manivelle (10), agit sur le culbuteur d'admission ou le culbuteur d'échappement (34) de telle sorte que la soupape d'admission ou la soupape d'échappement (37) soit ouverte pour une seconde toute petite levée de soupape.

2. Moteur avec dispositifs de décompression selon la revendication 1, dans lequel le dispositif de décompression unidirectionnel (30) est configuré pour agir sur le culbuteur d'échappement (34) de telle sorte que la soupape d'échappement (37) soit ouverte pour une première toute petite levée de soupape ; et le dispositif de décompression centrifuge (40) est configuré pour agir sur le culbuteur d'échappement (34) de telle sorte que la soupape d'échappement (37) soit ouverte pour une seconde toute petite levée de soupape ; et la seconde toute petite levée de soupape est plus petite que le première toute petite levée de soupape.

3. Moteur avec dispositifs de décompression selon la revendication 1, dans lequel, lorsque, au moment où le démarreur-générateur intégré (13) est démarré et sa vitesse de révolution vers l'avant est inférieure à un tr/min prédéterminé, l'unité de commande est configurée pour sortir un signal, faisant en sorte que le démarreur-générateur intégré (13) d'abord effectue une révolution vers l'arrière selon un angle de certains degrés et puis effectue une révolution vers l'avant.

4. Moteur avec dispositifs de décompression selon la revendication 1, dans lequel un élément de détection est agencé à une extrémité de l'organe de poussée (135), et est connecté à l'unité de commande, pour détecter l'emplacement de l'organe de poussée (135) afin de déterminer si le moteur est à un état de décompression ou non.

5. Moteur avec dispositifs de décompression selon la revendication 4, dans lequel l'élément de détection concerne un capteur Hall (150), et inclut un élément magnétique (151) et un élément à induction (152) ; l'élément magnétique (151) est agencé de façon fixe sur l'extrémité de l'organe de poussée (135), et l'élément à induction (152) est agencé de façon fixe sur un couvercle de culasse de cylindre (128) de la culasse de cylindre (126).

6. Moteur avec dispositifs de décompression selon la revendication 4, dans lequel l'élément de détection concerne un capteur de contact qui est agencé de façon fixe sur le couvercle de culasse de cylindre (128) de la culasse de cylindre (126).
